# EUROPEAN PATENT APPLICATION

(11) **EP 0 775 719 A2**
(43) Date of publication of application: **28.05.1997**
(21) Application number: 96308442.1
(22) Date of filing: 21.11.1996
(51) Int. Cl.: C08J 3/00, C08J 3/20

(54) **Process for preparing vulcanizable elastomeric compounds from granular elastomer blends**

(30) Priority: 22.11.1995 US 7448; 03.10.1996 US 724888
(71) Applicant: UNION CARBIDE CHEMICALS & PLASTICS TECHNOLOGY CORPORATION, Danbury, Connecticut 06817-0001 (US)
(72) Inventor: Smith, Gregory George, Belle Mead, New Jersey 08502 (US); Bernier, Robert Joseph Noel, Flemington, New Jersey 08822 (US)
(74) Representative: Allard, Susan Joyce

(57) **Abstract**

There is provided a process comprising combining at least two granular elastomers wherein each elastomer has particles in size of about 5 mm or smaller into a granular purblind; optionally adding one or more additives such as fillers, oils, processing aids, antidegradants, and the like; and masticating the purblind and optional additives when employed with at least one vulcanizing agent to produce a vulcanizable elastomeric compound, which compound finds particular utility in tire sidewalls and pneumatic tires.

## Description

This application claims the benefit of United States Provisional Application 60/007,448 filed November 22, 1995.

### Field of the Invention

This invention relates to a process for preparing vulcanizable elastomeric compounds from elastomer blends. The invention further relates to vulcanized elastomeric articles produced from elastomeric compounds prepared by the process.

### Background of the Invention

In the formulation of elastomeric compounds used in various components of a pneumatic tire (e.g., carcass, belt, tread, innerliner, sidewall, bead), a blend of two or more elastomers is often employed rather than a single elastomer. A principal reason for using an elastomer blend is to achieve an optimum performance profile for the particular tire component. A well known example is the use of a styrene-butadiene rubber (SBR)/polybutadiene rubber (BR) blend in a passenger tire tread. This gives the tread a combination of good wet skid resistance from the SBR and good wear resistance from the BR which could not be obtained using either elastomer alone. Another example is the blending of natural rubber (NR) with ethylenepropylene diene-rubber (EPDM) in a tire sidewall. The EPDM makes the sidewall resistant to attack by atmospheric ozone, while NR provides tear and flexcracking resistance plus compatibility with elastomers employed in other tire components (e.g., a tire carcass).

Whatever the reason for using a blend of elastomers in a tire component, the performance of the component in service will generally be found to increase as the degree of interdispersion of the elastomers increases. By degree of interdispersion is meant the ratio of the total interfacial area between the elastomers of the blend to the total volume of the elastomers.

Unfortunately, it is difficult, if not impossible, to achieve high interdispersion when preparing masticated compounds from blends of conventional elastomers because the conventional elastomers are supplied in solid bales. These bales enter the mastication process with a low surface-to-volume ratio, i.e., a low degree of interdispersion. Consequently, to create a large total interfacial area between the elastomers in the blend, a tremendous amount of mastication work is required. It is difficult to accomplish this amount of work on the elastomers within the relatively short duration of a typical mastication cycle without degrading the elastomers by stress or heat, thereby negating the benefits of high interdispersion.

Accordingly, there is an on-going need for a process capable of preparing masticated vulcanizable elastomeric compounds from blends of two or more elastomers, such that the elastomers are blended to a high degree of interdispersion in a short time without substantial degradation.

### Summary of the Invention

The present invention provides a process for preparing vulcanizable elastomeric compounds from blends of two or more elastomers, such that the elastomers are blended to a high degree of interdispersion in a short time without substantial degradation. The process comprises (a) combining two or more granular elastomers into a granular purblind wherein each elastomer is comprised of particles having an average diameter of about 5 mm or smaller; (b) optionally adding additives; (c) adding at least one vulcanizing agent; and (d) masticating to produce a vulcanizable elastomeric compound.

The invention further provides vulcanized elastomeric articles produced from the vulcanizable elastomeric compounds prepared by the process.

Additionally, there is provided a process for interfacial CO-curing of a shaped elastomeric bodies in mutual contact, which comprises (i) forming the vulcanizable elastomeric compound produced as set forth above into a shaped elastomeric body; (ii) assembling said shaped elastomeric body so that it contacts another shaped elastomeric body comprising a major portion of a highly unsaturated rubber to produce an assembly; and (iii) vulcanizing the assembly under conditions so as to effect substantial crosslinking across an interface between the shaped elastomeric bodies. Preferred highly unsaturated rubbers for use in the interfacial CO-curing process are selected from the group consisting of natural rubber, polybutadiene, polyisoprene, poly(butadiene-styrene), poly(isoprene-styrene), a polypentenamer, polychloroprene, poly(isoprene-acrylonitrile), poly(butadieneacrylonitrile), poly(butadiene-isoprene), poly(butadiene-isoprenestyrene), and mixtures thereof.

### Detailed Description of the Invention

Recent patents such as U.S. Patent Nos. 4,994,534; 5,304,588; 5,317,036; and 5,453,471 teach the production of elastomeric polymers in the gas phase in a fluidized bed reactor. The elastomers produced by these processes are granular with an average diameter size of up to about 5 mm or smaller, preferably each elastomer is comprised of particles having an average diameter of about 2 mm or smaller, and most preferably 1mm or smaller. Generally, these elastomeric polymers are polymerized at or above the sticking or softening temperature of the polymer. Illustrative of the granular elastomers that can be made in a gas phase process which can be blended in accordance with the invention are the following:
IR (polyisoprene)
BR (polybutadiene)
SBR (polymer of butadiene copolymerized with styrene) ABS (polymer of acrylonitrile, butadiene and styrene)
Nitrile (polymer of butadiene copolymerized with acrylonitrile)
Butyl (polymer of isobutylene copolymerized with isoprene)
EPR (polymer of ethylene copolymerized with propylene)
EPDM (polymer of ethylene copolymerized with propylene and a diene such as hexadiene, dicyclopentadiene, or ethylidene norbornene)
Copolymer of ethylene and an alpha olefin having 3 to 12 carbon atoms
Terpolymer of ethylene, an alpha olefin having 3 to 12 carbon atoms, and a diene (preferably non-conjugated
Neoprene (polychloroprene)
Silicone (polydimethyl siloxane)
Copolymer of ethylene and vinyltrimethoxy silane
Copolymers of ethylene and one or more of acryonitrile, maleic acid esters, vinyl acetate, acrylic and methacrylic acid esters and the like.
Copolymers of butadiene and isoprene
Terpolymers of styrene, butadiene, and isoprene
Chlorobutyl (chlorinated copolymer of isobutylene and isoprene)
Bromobutyl (brominated copolymer of isobutylene and isoprene)
Brominated copolymer of isobutylene and paramethylstyrene

Of these, polyisoprene, polybutadiene, poly(styrene-butadiene) rubber, ethylene-propylene rubbers (EPR), and ethylene-propylene-diene rubbers (EPDM) are preferred. The composition of the elastomer blend is such that no single elastomer accounts for more than 99 percent of the total weight of the elastomers. More preferably, no single elastomer accounts for more than 95 percent of the total weight of the elastomers.

It is further understood that the elastomers that are blended in accordance with the process of this invention do not have to be chemically distinct, provided that they are substantially different in some aspect of molecular structure. For example, they can be the same polymer in two substantially different molecular weight grades or contain substantially different amounts of the respective comonomers comprising the elastomers.

In the preferred method of practicing the invention, the granular elastomers are first combined into a granular purblind. Optionally, this granular purblind may contain, in addition to the elastomers, any or all of the other compounding ingredients or additives. Any of the conventional methods for physically blending particulate solids, such as, for example, tumbling or stirring, can be used to prepare the purblind. The purblind is then masticated together with any remaining compounding ingredients to produce a vulcanizable elastomeric compound. Mastication can be accomplished in a batch process using conventional equipment such as a Banbury mixer, roll mill, or the like. Alternatively, mastication can be accomplished in a continuous process using, for example, a twin screw extruder.

A less preferred method of practicing the invention, but still within its scope, is to substantially effect granular preblending inside the masticating equipment, before significant mastication takes place. For example, in the early part of a Banbury mixing cycle, after charging separately the granular elastomers to the mixing chamber but before lowering the ram, the action of the rotors will substantially effect granular preblending of the elastomers and any other compounding ingredients present. Subsequently, mastication will commence upon lowering the ram.

It is understood that this invention contemplates that the mastication process may occur in sequential stages, with any of the compounding ingredients other than elastomers being added in any stage. A common example is the two stage mastication process wherein all ingredients except vulcanizing agents and accelerators are masticated in a first stage, the first stage compound is cooled down, vulcanizing agents and accelerators are added, and the compound is then finished in a second mastication stage. This is done in order to avoid premature vulcanization caused by masticating at high temperatures in the presence of vulcanizing agents and accelerators.

Fillers for use as an additive in the invention include carbon black; silicates of aluminum, magnesium, calcium, sodium, potassium and mixtures thereof; carbonates of calcium, magnesium and mixtures thereof; oxides of silicon, calcium, zinc, iron, titanium, and aluminum; sulfates of calcium, barium, and lead; alumina trihydrate; magnesium hydroxide; phenol-formaldehyde, polystyrene, and poly(alphamethyl)styrene resins, natural fibers, synthetic fibers, and the like.

Plasticizers employed as additives in the invention include petroleum oils such as ASTM D2226 aromatic, naphthenic and paraffinic oils; polyalkylbenzene oils; organic acid monoesters such as alkyl and alkoxyalkyl oleates and stearates; organic acid diesters such as dialkyl, dialkoxyalkyl, and alkyl aryl phthalates, terephthalates, sebacates, adipates, and glutarates; glycol diesters such as tri-, tetra-, and polyethylene glycol dialkanoates; trialkyl trimellitates; trialkyl, trialkoxyalkyl, alkyl diaryl, and triaryl phosphates; chlorinated paraffin oils; coumarone-indene resins; pine tars; vegetable oils such as castor, tall, rapeseed, and soybean oils and esters and epoxidized derivatives thereof; and the like.

Antioxidants and antiozonants additives for use in the invention include hindered phenols, bisphenols, and thiobisphenols; substituted hydroquinones; tris(alkylphenyl)phosphites; dialkylthiodipropionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio)1,3,5-triazine, hexahydro-1,3,5-tris-β-(3,5-di-t-butyl-4-hydroxyphenyl)propionyl-s-triazine, 2,4,6-tris(n-1,4-dimethylpentylpphenylenediamino)-1,3,5-triazine, tris-(3,5-di-t-butyl-4-hydroxybenzyl)isocyanurate, nickel dibutyldithiocarbamate, 2-mercaptotolylimidazole and its zinc salt, petroleum waxes, and the like.

Other optional additives for use in the invention include activators (metal oxides such as zinc, calcium, magnesium, cadmium, and lead oxides; fatty acids such as stearic, lauric, oleic, behenic, and palmitic acids and zinc, copper, cadmium, and lead salts thereof; di-, tri-, and polyethylene glycols; and triethanolamine); accelerators (sulfenamides such as benzothiazoles, including bis-benzothiazoles, and thiocarbamyl sulfenamides, thiazoles, dithiocarbamates, dithiophosphates, thiurams, guanidines, xanthates, thioureas, and mixtures thereof); tackifiers (rosins and rosin acids, hydrocarbon resins, aromatic indene resins, phenolic methylene donor resins, phenolic thermosetting resins, resorcenol-formaldehyde resins, and alkyl phenol formaldehyde resins such as octylphenol-formaldehyde resin); homogenizing agents, peptizers, pigments, flame retardants, fungicides, and the like. The total amount of optional ingredients can range from about 40 to 800 parts by weight based upon 100 parts of the elastomers in the composition.

Vulcanizing agents for use in the invention include sulfurcontaining compounds such as elemental sulfur, 4,4'-dithiodimorpholine, thiuram di- and polysulfides, alkylphenol disulfides, and 2-morpholino- dithiobenzothiazole; peroxides such as di-tertbutyl peroxide, tertbutylcumyl peroxide, dicumyl peroxide, 2,5dimethyl-2,5-di-(tertbutylperoxy) hexane, di-(tertbutylperoxyisopropyl) benzene, tertbutyl peroxybenzoate and 1,1-di-(tertbutylperoxy)-3,3,5-trimethylcyclohexane; metal oxides such as zinc, magnesium, and lead oxides; dinitroso compounds such as p-quinone dioxime and p,p'-dibenzoylquinone-dioxime; and phenol-formaldehyde resins containing hydroxymethyl or halomethyl functional groups. The suitability of any of these vulcanizing agents for use in the invention will be largely governed by the choice of elastomers, as is well known to those skilled in the compounding art. For the preferred elastomers of the invention, the sulfur containing compounds and the peroxides are the preferred vulcanizing agents, and the sulfur containing compounds are most preferred. It is understood that mixtures of these vulcanizing agents can be employed though this is generally not preferred. The amount of the vulcanizing agent can range from about 1 to 10 parts by weight based upon 100 parts of the elastomers in the composition.

Vulcanization temperatures and time employed are typical. Temperatures ranging from about 250°F. to about 400°F, and times ranging from about 1 minute to about 60 minutes are employed.

The invention is particularly useful in the manufacture of tire sidewalls that comprise a blend of EPDM with one or more highly unsaturated diene elastomers (e.g., BR, SBR, and IR). The advantage of granular preblended elastomers in the process of the invention over conventional baled elastomers is that the granular preblended elastomers enter the energy-intensive mastication process already fairly highly interdispersed. Consequently, considerably less mastication is needed to achieve the high degree of interdispersion desired for optimum performance than if the elastomers entered the mastication process in conventional bale form. Thus, gas phase, granular, preblended elastomers can be mixed to a high degree of elastomer interdispersion in a shorter time and with less polymer degradation than conventional baled elastomers. This advantage of granular preblended elastomers may permit the mixing of tire compounds in a single stage batch, or even in a continuous process. Tire compounds that use conventional baled elastomers have to be mixed in two stages with cooling in between the stages, due to the heat generated in dispersing the elastomers and filler.

Specially formulated vulcanizable elastomeric compounds prepared in accordance with the process of this invention can be extruded through a die to produce elastomeric articles such as strip stock for the tread, sidewall, and bead filler components of a pneumatic tire, or used to produce sheet stock for the air retention innerliner. Other specially formulated elastomeric compounds prepared in accordance with this invention can be calendered onto textile or steel cord fabric to produce cord-reinforced sheet stock for the carcass and circumferential belt components of the tire.

The "green" or unvulcanized tire is then built by assembling the various components (except circumferential belt and tread) on the surface of a cylindrical drum, radially expanding and axially compressing the assembly to produce a toroidal shape, then placing the belt and tread components in position around the circumference of the toroid. Finally, the green tire is vulcanized by inflating with high pressure steam against the inner surface of a closed, heated aluminum mold. In the early stage of the vulcanization process, when the various elastomeric compounds are still soft and flowable, the pressure of the tire against the inner surface of the mold produces the final precise shape, tread pattern, sidewall lettering, and decorative markings. Later, in the vulcanization process, heat-activated crosslinking reactions take place within the various elastomeric compounds so that when the mold is finally opened the compound has undergone crosslinking to a degree that is essentially optimum for the intended purpose.

The vulcanizable elastomeric compounds produced by the process can be shaped and vulcanized into an elastomeric article or body. The elastomeric bodies can be readily CO-cured. Accordingly, the present invention includes a process for interfacial CO-curing of shaped elastomeric bodies in mutual contact. The process comprises (i) forming the vulcanizable elastomeric compound into a shaped elastomeric body; (ii) assembling the shaped elastomeric body so that it contacts another shaped elastomeric body comprising a major portion of a highly unsaturated rubber to produce an assembly; and (iii) vulcanizing the assembly under conditions so as to effect substantial crosslinking across an interface between the shaped elastomeric bodies.

The highly unsaturated rubber employed can be selected from the group consisting of natural rubber, polybutadiene, polyisoprene, poly(butadiene-styrene), poly(isoprene-styrene), a polypentenamer, polychlorprene, poly(isoprene-acrylonitrile), poly(butadieneacrylonitrile), poly(butadiene-sioprene), poly(butadiene-isoprenestyrene), and mixtures thereof.

The following examples are given to illustrate the invention and are not intended as limitations thereof.

### EXAMPLES

Compositions A-E (Table I) were mixed in a 75 cm3 electrically heated internal mixer with Banbury-type rotors, using a 70% fill factor. Mixing was done in two stages. In the first stage, all ingredients except sulfur and TBBS were charged to the mixer at 100'C and mixed at 50 RPM for 5 minutes. The stock was discharged from the mixer and cooled. In the second stage, the cooled stock was recharged to the mixer at 70°C and mixed with the sulfur and TBBS at 50 RPM for 2 minutes. After the second stage, the composition was further homogenized by end passing through a roll mill at 90°C.

**TABLE 1**

| Compositions: | A | B | C | D | E |
|---|---|---|---|---|---|
| NR | 50 phr | - | - | - | - |
| Conventional BR | 50 | - | - | - | 60 |
| Conventional EPDM | - | - | - | - | 40 |
| Granular BR | - | 60(a) | 60(b) | 40(a) | - |
| N650 black | 50 | 50 | 50 | 50 | 50 |
| Naphthenic oil | 10 | - | - | - | 40 |
| Paraffinic oil | - | 10 | 10 | 40 | - |
| 6PPD | 3 | - | - | - | - |
| Polymerized TMQ | 1 | 1 | 1 | 1 | 1 |
| Zinc oxide | 3 | 3 | 3 | 3 | 3 |
| Stearic acid | 2 | 2 | 2 | 2 | 2 |
| TBBS | 1 | 1 | 1 | 1 | 1 |

| | | | | | |
|---|---|---|---|---|---|
| (a) granular preblended elastomers | | | | | |
| (b) individually premassed elastomers | | | | | |

Composition A (comparative) represents a conventional tire sidewall composition based on a blend of natural rubber (NR) and BR. Compositions B, C, and D are experimental sidewall compositions based on a blend of granular BR and granular EPDM. The granular BR and EPDM were produced by a gas phase process. The BR had a Mooney viscosity of about 40 (ML 1+4 @ 100°C) and a *cis* 1,4 content of about 97%. It also contained 63 phr N650 carbon black as an antiagglomeration agent. The EPDM had a Mooney viscosity of about 80 (ML 1+4 C& 125°C), an ethylene content of 70 wt. %, and an ENB content of 6 wt. %. It also contained 14 phr N650 carbon black as an antiagglomeration agent. (Note: The carbon black supplied with the granular elastomers as an antiagglomeration agent was counted as part of the 50 phr total black in the recipe.) The only difference between Compositions B and C is that composition B used granular preblended elastomers, while composition C used the same elastomers individually premassed (to simulate the conventional bale form). Composition D is the same as composition B except for the oil loading. Composition E (comparative) represents a "conventional" counterpart to Composition D, in that composition E has essentially the same recipe as composition D but utilizes conventional commercial baled elastomers instead of granular elastomers. The conventional BR in Composition E (also in Composition A) had about the same Mooney viscosity and *cis* 1,4 content as the granular BR. However, the conventional EPDM in Composition E had a much higher Mooney viscosity (approximately 300) and ENB content (9.5 wt. %) than the granular EPDM. This conventional EPDM was supplied as a 100 phr oil-extended product; thus, all of the 40 phr oil in the recipe for Composition E came from the extender oil.

The five mixed compositions were press-cured into 0.8 mm thick sheets at 160°C. Press cycle time was the time to peak modulus in a 160'C MDR cure, plus mold lag time. The cured sheets were evaluated for tear strength and crack growth at 60°C.

The tear strength test was a modification of the ASTM Die C Tear Test. The standard ASTM Die C specimen was used, but the initial grip separation was reduced to 6.3 mm, and the grip displacement rate was reduced to 0.5 mm/sec. These changes were made in order to accommodate the test equipment. The crack growth test was of a special design. Two 14 mm x 9 mm rectangular specimens were cut from the cured sheet. Next, 1-mm razor cuts were made into both long edges of each specimen (four cuts in all). The cut specimens were mounted side-by-side in the tensile grips of a dynamic mechanical testing machine equipped with a controlled temperature chamber with the razor cuts perpendicular to the tensile direction. When the temperature equilibrated at 60°C, the grip separation was increased just enough to cancel the force generated by specimen clamping and thermal expansion. This grip separation at zero force was defined as the initial gage length. It typically was between 5.8 and 6.1 mm.

The crack growth test consisted of imposing a 5% static tensile strain on the specimens and further superimposing a 15% periodic pulsed strain on top of the static strain. The strain pulse had the shape of a half sine wave, a half-width of 20 msec, and a period of 100 msec. After a total of 9.8 x 104 strain pulses, the specimens were removed from the testing machine and the length of the crack propagation from each of the four razor cuts was measured using a microscope equipped with a measuring stage. The average of the four measurements was defined as the crack growth.

Table II shows the results. Note that Composition B, prepared from the granular elastomer purblind, has higher tear strength and less (i.e., better) crack growth than Composition C (same recipe but polymers premassed). The superior performance of Composition B as compared to Composition C is believed to be due to more intimate interdispersion of the elastomers in the composition prepared from granular elastomer purblind. The advantage conferred by granular preblending is significant enough to make Composition B (BR/EPDM granular purblind) nearly as good as the conventional NR/BR sidewall compound (Composition A) with respect to tear strength and crack growth.

**TABLE II**

| Compositions: | A | B | C | D | E |
|---|---|---|---|---|---|
| Mooney ML @ 100°C | 47 | 57 | 57 | 29 | 64 |
| | | | | | |
| Tear strength (kN/m) | 86 | 74 | 57 | 43 | 56 |
| | | | | | |
| Crack growth (mm) | 0.7 | 0.6 | 0.9 | 0.2 | 0.40 |

Addition of oil to a composition typically improves crack growth but reduces tear strength. Composition D (40 phr oil) as compared to Composition B (10 phr oil) illustrates this effect. Note that a granular preblended BR/EPDM compound roughly midway between Compositions B and D in oil content (i.e., about 25 phr oil) would have about the same tear strength and crack growth as the BR/EPDM composition prepared with conventional baled elastomers (Composition E). However, this granular preblended composition would have a much lower Mooney viscosity (better processability) and oil content (less oil migration to other tire components) than the conventional composition. This is further proof of the benefits of granular elastomer preblending in the preparation of tire compounds.

## Claims

1. A process for preparing vulcanizable elastomeric compounds comprising (a) combining two or more granular elastomers wherein each elastomer is comprised of particles having an average diameter of about 5 mm or smaller; (b) optionally adding additives; (c) adding at least one vulcanizing agent; and (d) masticating to produce a vulcanizable elastomeric compound; and wherein the combining of step (a) is accomplished by preblending or co-feeding the elastomers.

2. A process as claimed in Claim 1 wherein each elastomer is selected from the group consisting of:
polyisoprene;
a polybutadiene;
a polymer of butadiene copolymerized with styrene;
a polymer of acrylonitrile, butadiene and styrene;
a polymer of butadiene copolymerized with acrylonitrile;
a polymer of isobutylene copolymerized with isoprene;
a polymer of ethylene copolymerized with propylene;
a polymer of ethylene copolymerized with propylene and a diene;
polychloroprene;
a polydimethyl siloxane;
a copolymer of ethylene and an alpha olefin having 3 to 12 carbon atoms;
a terpolymer of ethylene, an alpha olefin having 3 to 12 carbon atoms, and a diene;
copolymers of ethylene and vinyltrimethoxy silane; copolymers of ethylene and one or more of acryonitrile, maleic acid esters, vinyl acetate, acrylic and methacrylic acid esters;
copolymers of butadiene and isoprene;
terpolymers of styrene, butadiene, and isoprene; chlorobutyl (chlorinated copolymer of isobutylene and isoprene);
bromobutyl (brominated copolymer of isobutylene and isoprene); and
brominated copolymer of isobutylene and paramethylstyrene; and
wherein the vulcanizing agent is a sulfur-containing compound, a peroxide, a metal oxide, a dinitroso compound, or a mixture thereof.

3. A process as claimed in Claim 2 wherein the elastomers are polymerized in the gas phase in the presence of an inert particulate material which is carbon black, silica, clay, talc, or a mixture thereof.

4. A process as claimed in Claim 3 wherein the elastomers are selected from ethylene-propylene-diene, ethylene-C₄-C₁₂ alpha olefin-diene, polybutadiene, poly(styrene-butadiene), and poly-isoprene.

5. A process as claimed in Claim 1 wherein the additives which can optionally be added are fillers, plasticizers, anti-oxidants and antiozonants, activators, accelerators, tackifiers, homogenizing agents, peptizers, pigments, flame retardants, or fungicides; wherein
the fillers are selected from carbon black; silicates of aluminum, magnesium, calcium, sodium, potassium and mixtures thereof, carbonates of calcium, magnesium and mixtures thereof; oxides of silicon, calcium, zinc, iron, titanium, and aluminum; sulfates of calcium, barium, and lead; alumina trihydrate; magnesium hydroxide; phenolformaldehyde, polystyrene, and poly(alphamethyl)styrene resins, natural fibers, synthetic fibers, and mixtures thereof;
the plasticizers are selected from petroleum oils; polyalkylbenzene oils; organic acid monoesters; organic acid diesters; glycol diesters; trialkyl trimellitates; trialkyl, trialkoxy-alkyl, alkyl diaryl, and triaryl phosphates; chlorinated paraffin oils; coumarone-indene resins; pine tars; vegetable oils and esters and epoxidized derivatives thereof; and mixtures thereof;
the antioxidants and antiozonants are selected from hindered phenols, bisphenols, and thiobisphenols; substituted hydroquinones; tris(alkylphenyl)phosphites; dialkylthiodipropionates; phenylnaphthylamines; substituted diphenylamines; dialkyl, alkyl aryl, and diaryl substituted p-phenylene diamines; monomeric and polymeric dihydroquinolines; 2-(4-hydroxy 3,5-t-butylaniline)-4,6-bis(octylthio)-1,3,5-triazine; hexahydro1,3,5-tris-B-(3,5-di-t-butyl-4-hydroxyphenyl)propionyl-s-triazine; 2,4,6-tris(nl,4-dimethylpentyl-p-phenylenediamino)-1,3,5-triazine; tris-(3,5-di-t-butyl-4-hydroxy-benzyl)isocyanurate; nickel dibutyldithiocarbamate; 2-mercaptolylimidazole and its zinc salt; petroleum waxes; and mixtures thereof;
the activators are selected from the group consisting of metal oxides; fatty acids and metal salts thereof, di-, tri-, and polyethylene glycols; triethanolamine; and mixtures thereof;
the accelerators are selected from the group consisting of sulfenamides, thiazoles, dithiocarbamates, dithiophosphates, thiurams, guanidines, xanthates, thioureas, and mixtures thereof; and
the tackifiers are selected from the group consisting of rosins and rosin acids, hydrocarbon resins, aromatic indene resins, phenolic methylene donor resins, phenolic thermosetting resins, resorcinolformaldehyde resins, and alkyl phenol formaldehyde resins, and mixtures thereof.

6. An elastomeric article prepared by shaping and vulcanizing an elastomeric compound prepared by a process as claimed in any one of the preceding claims.

7. A tire sidewall prepared by shaping and vulcanizing an elastomeric compound prepared by a process as claimed in any one of claims 1 to 5.

8. A process for interfacial co-curing of shaped elastomeric bodies in mutual contact, which comprises (i) forming the vulcanizable elastomeric compound produced by a process as claimed in any one of claims 1 to 5 into a shaped elastomeric body; (ii) assembling the shaped elastomeric body so that it contacts another shaped elastomeric body comprising a highly unsaturated rubber to produce an assembly; and (iii) vulcanizing the assembly under conditions so as to effect substantial crosslinking across an interface between the shaped elastomeric bodies.

9. A process as claimed in Claim 8 wherein the highly unsaturated rubber is natural rubber, polybutadiene, polyisoprene, poly(butadiene-styrene), poly(isoprene-styrene), a polypentenamer, polychloroprene, poly(isoprene-acrylonitrile), poly(butadiene-acrylonitrile), poly(butadiene-isoprene), poly(butadiene-isoprene-styrene), or a mixture thereof.

10. A tire whenever produced by the process of Claim 8.
